# EUROPÄISCHE PATENTSCHRIFT

(11) **EP 2 098 389 B1**
(45) Veröffentlichungstag und Bekanntmachung des Hinweises auf die Patenterteilung: **02.03.2011**
(21) Anmeldenummer: 09154066.6
(22) Anmeldetag: 02.03.2009
(51) Int. Cl.: B60G 17/015, B60G 17/04

(54) **Hydraulische Federungsanordnung**
Hydraulic springing assembly
Agencement de ressort hydraulique

(30) Priorität: 05.03.2008 DE 102008012704
(43) Veröffentlichungstag der Anmeldung: 09.09.2009
(73) Patentinhaber: Deere & Company, Moline, IL 61265-8098 (US)
(72) Erfinder: Bauer, Wolfgang, Dr., 67098 Bad Dürkheim (DE)
(74) Vertreter: Holst, Sönke

(56) Entgegenhaltungen:
- EP-A- 0 615 870
- EP-A- 0 670 230
- EP-A- 0 913 280
- EP-A- 1 232 883
- EP-A- 1 686 045
- DE-A1-102005 062 246
- US-A1- 2004 113 377

## Beschreibung

Die Erfindung betrifft eine hydraulische Federungsanordnung nach dem Oberbegriff des Anspruchs 1.

### Stand der Technik

Bei heutigen hydropneumatischen Federungssystemen haben sich zwei grundsätzliche Typen etabliert, die jeweils besondere Vorteile und Nachteile aufweisen. Zum einen sind dies Systeme mit einfachwirkenden Zylindern bzw. mit regenerativ geschalteten doppelt wirkenden Zylindern, bei denen nur die Fläche der Kolbenstange die äußere Last trägt. Zum anderen sind Systeme mit doppeltwirkenden Zylindern bekannt, die jeweils einen separaten Ölkreislauf und damit einzelne Federn für die beiden Zylinderseiten aufweisen. Während bei den einfachwirkenden Systemen als vorteilhaft anzusehen ist, dass der Realisierungsaufwand geringer als bei den Systemen mit doppeltwirkenden Zylindern ist, haben letztere den Vorteil, dass man durch Verspannung der beiden durch die Zylinderkammern gebildeten Einzelfedern gegeneinander eine Vorlast aufbringen kann, die zu einer weniger überproportionalen Abhängigkeit der Federrate von der jeweiligen Last als bei den Systemen mit einfachwirkenden Zylindern bzw. mit regenerativ geschalteten doppelt wirkenden Zylindern führt. In begrenzten Bereichen der Last kann sogar ein nahezu proportionales Verhalten erreicht werden und es werden größere Unterschiede zwischen der minimalen und maximalen Federlast verkraftet. Durch geeignete Ansteuerung der Zylinder kann auch die Federrate verstellt werden.

Für eine abhängig von äußeren Einflüssen, wie der Bodenbeschaffenheit oder der jeweiligen Belastung in ihrer Dämpfung bzw. Federrate verstellbare Federung ist eine relativ schnelle Verstellbarkeit der Federelemente erforderlich. Hierfür wurden bisher verstellbare Dämpfer verwendet.

In der DE 39 02 743 C wird ein aktives Rad- oder Achsabstützaggregat mit einer hydraulischen Federungsanordnung eingangs genannter Art beschrieben. Die Kammern eines doppeltwirkenden Hydraulikzylinders sind ständig durch verstellbare Drosseln mit separaten Druckspeichern verbunden. Darüber hinaus können die voneinander getrennten Kammern durch eine Steuer- oder Regelventilanordnung mit der Druckseite oder der Saugseite einer Hydraulikpumpe verbunden werden. Bei einer Fehlfunktion der die Steuer- oder Regelventilanordnung betätigenden Steuerschaltung oder der Pumpe nimmt die Steuer- oder Regelventilanordnung eine die Kammern abschließende Lage ein. Die Betriebsart, in der die Kammern des Hydraulikzylinders nach außen hin nur mit den Druckspeichern verbunden sind, dient demnach nur für einen Notbetrieb.

Die EP 1 686 045 A beschreibt eine fahrbare Arbeitsmaschine mit einem Fahrwerk und einer darauf durch Hydraulikzylinder abgestützten Bedienerstation. Die Kolbenseiten der Hydraulikzylinder sind permanent mit Druckspeichern verbunden. Eine Schalteinrichtung verbindet in einer ersten Schaltstellung den Kolbenraum eines Zylinders mit dem Kolbenstangenraum des jeweils anderen Zylinders. In einer anderen Schaltstellung wird eine fluidführende Verbindung zwischen dem Kolbenraum eines Zylinders mit seinem Kolbenstangenraum hergestellt. Die erste Schaltstellung verhindert durch die kreuzweise Verschaltung der Hydraulikzylinder ungewollte Wankbewegungen der Bedienerstation. Die zweite Schaltstellung ermöglicht es, die Bedienerstation in einem vorgebbaren Bereich zu neigen, um beispielsweise einen schwierig einsehbaren Arbeitsbereich besser überblicken zu können.

In der DE 10 2005 062 246 A1 wird eine hydropneumatische Achsfederung für Fahrzeuge mit einem doppeltwirkenden Hydraulikzylinder beschrieben, dessen Kammern jeweils ständig mit einem Druckspeicher verbunden sind. Durch Ventileinheiten mit veränderbarem Strömungswiderstand können die Kammern untereinander verbunden werden.

Die als gattungsbildend angesehene US 2004/0113377 A1 beschreibt ein hydropneumatisches Federungssystem mit zwei doppeltwirkenden Hydraulikzylindern, deren Kammern kreuzweise untereinander und mit jeweils einem Druckspeicher verbunden sind. Ein dritter und vierter Druckspeicher ist jeweils über ein Ventil mit einem der Druckspeicher verbindbar. Die jeweiligen Kammern der Hydraulikzylinder sind über eine Ventilgruppe untereinander verbindbar.

### Aufgabe der Erfindung

Die der Erfindung zu Grunde liegende Aufgabe wird darin gesehen, eine schnelle Verstellung der Federrate und/oder Dämpfung einer hydropneumatischen Federung zu ermöglichen, um auf mögliche Schwingungsanregungen reagieren zu können.

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Es sind zwei doppeltwirkende Hydraulikzylinder vorgesehen, deren Kolbenräume und Kolbenstangenräume jeweils permanent mit ihnen zugeordneten Druckspeichern verbunden werden. Zwei veränderbare Strömungswiderstände sind kreuzweise zwischen dem Kolbenraum eines Hydraulikzylinders und dem Kolbenstangenraum des jeweils anderen Zylinders und umgekehrt angeordnet. Hier ergibt sich bei fast oder ganz geschlossenen Strömungswiderständen, in der alle Zylinderkammern mehr oder weniger abgetrennt und nur durch die Druckspeicher abgefedert sind, eine relativ hohe Federrate. Bei geöffneten Strömungswiderständen werden durch die Kreuzschaltung ungewollte Bewegungen des mittels der hydraulischen Federungsanordnung abgestützten Elements in Abstandsrichtung der Hydraulikzylinder vermieden, wobei die Federrate kleiner als bei geschlossenen Strömungswiderständen ist.

Die Vorteile der Erfindung werden darin gesehen, dass man bei überschaubarem Aufwand eine Verstellbarkeit der Federrate und der Dämpfung erzielt.

Bei einer bevorzugten Ausgestaltung der Erfindung sind Drosseln oder andere Strömungswiderstände mit festen oder verstellbaren Durchlasswiderständen zwischen die Druckspeicher und die damit verbundenen Kammern der Hydraulikzylinder geschaltet. Man erreicht dadurch, dass sich bei einer Verstellung der Strömungswiderstände auch die Dämpfung ändert. Bei großen Strömungswiderständen werden die größeren Volumenströme der Kolbenstangenkammer und der Kolbenkammer jeweils nur durch eine Drossel geführt. Bei kleinen Strömungswiderständen strömt der vergleichsweise geringe Volumenstrom durch zwei parallel geschaltete Drosseln in die Druckspeichervolumina. Man erhält demnach eine weichere Dämpfung als bei großen Strömungswiderständen. Durch eine Verstellung des Strömungswiderstands oder der Strömungswiderstände kann also sehr schnell eine Umschaltung der Dämpfung und Federung zwischen den Zuständen hart und weich erfolgen. Durch vorzugsweise proportional veränderbare Drosseln können weitere Zwischenzustände eingestellt werden.

Die einzelnen Strömungswiderstände können durch jeweils eine Drossel mit veränderbarem Durchlassquerschnitt oder eine Blende mit veränderbarem Durchlassquerschnitt oder durch eine Ventilanordnung oder eine Kaskadenschaltung, die aus mehreren der zuvor erwähnten, in Reihe oder parallel geschalteten Strömungswiderstände besteht, oder eine beliebige Kombination daraus, gebildet werden. Die Ventilanordnung kann als Druckregelventil oder als Druckbegrenzungsventil ausgeführt sein. Eine verwendbare Ventilanordnung weist nur zwei Schaltstellungen auf und ist als 2/2-Wege-Ventil realisiert. Bei einer bevorzugten Ausführungsform umfasst die Ventilanordnung hingegen eine verstellbare Öffnung, um den Strömungswiderstand zwischen den Kammern des oder der Hydraulikzylinder stufenlos oder in mehr als zwei Stufen an die jeweiligen Umgebungsbedingungen anzupassen. Die Ventilanordnung ist insbesondere als Proportionalventil ausgeführt. Dabei ist es nicht erforderlich, dass die Ventilanordnung eine vollständig geschlossene Stellung aufweist, sondern es ist auch denkbar, dass sie in ihrer weitest möglich geschlossenen Stellung noch einen (wenn auch hinreichend großen) geöffneten Strömungswiderstand bildet, der durch eine Drossel realisiert sein kann.

Der veränderbare Strömungswiderstand bzw. die veränderbaren Strömungswiderstände wird oder werden zweckmäßigerweise mit einer Regel- oder Steuereinrichtung verbunden, die zur selbsttätigen, adaptiven bzw. semi-aktiven Verstellung des jeweiligen Strömungswiderstands dient. Über geeignete Sensoren werden Umgebungsbedingungen, wie die aktuelle Belastung der Federungsanordnung und eventuelle von ihr durchgeführte Schwingungen erfasst und der Strömungswiderstand in die jeweils angemessene Stellung verbracht. Die Steuereinrichtung kann auch die erwähnten, verstellbaren Drosseln oder anderen Strömungswiderstände, die zwischen die Kammern des Hydraulikzylinders und die Druckspeicher geschaltet sind, abhängig von den Umgebungsbedingungen ansteuern.

Die erfindungsgemäße Federungsanordnung eignet sich besonders für Systeme mit relativ geringen Laständerungen, wie beispielsweise die Federung von Bedienerstationen von Fahrzeugen, z. B. Fahrerkabinen landwirtschaftlicher Fahrzeuge.

### Ausführungsbeispiel

Anhand der Abbildungen wird ein Ausführungsbeispiel der Erfindung erläutert. Es zeigt:

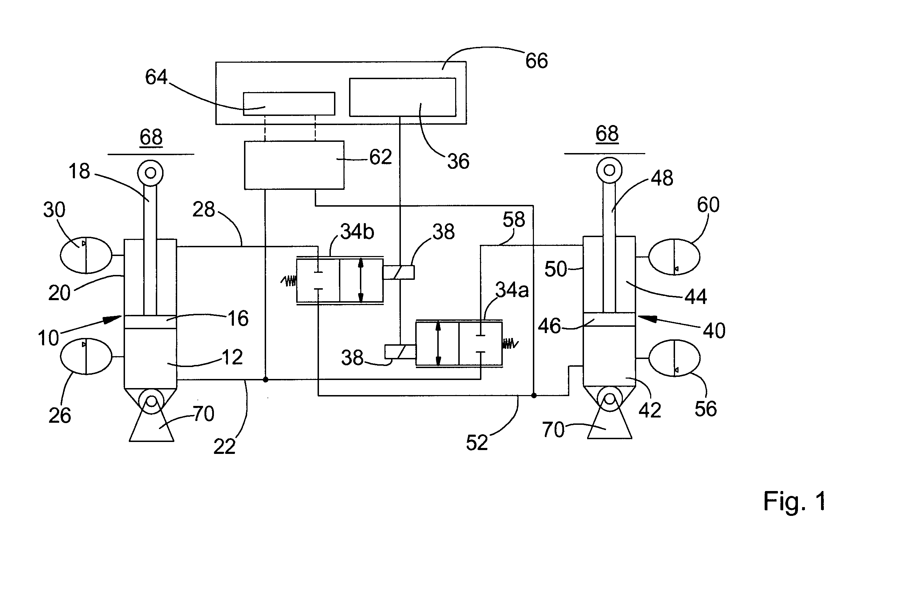

Fig. 1 ein Schaltschema einer hydraulischen Federungsanordnung mit zwei kreuzweise verschaltbaren Hydraulikzylindern.

Die Federungsanordnung gemäß der Ausführungsform nach Figur 1 umfasst einen ersten Hydraulikzylinder 10 und einen zweiten Hydraulikzylinder 40, die insbesondere zur gefederten Abstützung einer Fahrerkabine 68 gegenüber dem Fahrgestell 70 eines landwirtschaftlichen Fahrzeugs, z. B. Traktors oder einer selbstfahrenden Erntemaschine, dienen können, wobei die Hydraulikzylinder 10, 40 relativ zur Vorwärtsrichtung des Fahrzeugs nebeneinander oder hintereinander angebracht sein können. Dabei können die Gehäuse 20, 50 der Hydraulikzylinder 10, 40 mit dem Fahrgestell 70 verbunden sein, während ihre Kolbenstangen 18, 48 mit der Fahrerkabine 68 verbunden sind, oder umgekehrt.

Die Kolbenkammer 12 des ersten Hydraulikzylinders 10 ist direkt und ständig mit einem ersten Druckspeicher 26 verbunden, während die Kolbenstangenkammer 14 des ersten Hydraulikzylinders 10 direkt und ständig mit einem zweiten Druckspeicher 30 verbunden ist. Analog ist die Kolbenkammer 42 des zweiten Hydraulikzylinders 40 ständig mit einem dritten Druckspeicher 56 verbunden, während seine Kolbenstangenkammer 44 ständig mit einem vierten Druckspeicher 60 verbunden ist. Wie in der ersten Ausführungsform können zwischen die Druckspeicher 26, 30, 56, 60 und die zugehörigen Kammern 12, 14, 42, 44 der Hydraulikzylinder 10, 40 noch verstellbare oder feste Drosseln geschaltet werden. Die Druckspeicher 26, 30, 56, 60 können wie in der ersten Ausführungsform als Membranspeicher oder als Kolbenspeicher oder Blasenspeicher ausgeführt sein.

Die Kolbenkammer 12 des ersten Hydraulikzylinders 10 ist über eine Leitung 22 mit einer als erster veränderbarer Strömungswiderstand dienenden Ventilanordnung 34a verbunden, während seine Kolbenstangenkammer 14 über eine Leitung 28 mit einer anderen, als zweiter veränderbarer Strömungswiderstand dienende Ventilanordnung 34b verbunden ist. Die Kolbenkammer 42 des zweiten Hydraulikzylinders 40 ist über eine Leitung 52 mit der Ventilanordnung 34b verbunden, während seine Kolbenstangenkammer 44 über eine Leitung 58 mit der Ventilanordnung 34a verbunden ist. Die Ventilanordnungen 34a, 34b sind jeweils in Form eines Proportionalventils realisiert und analog zu der ersten Ausführungsform fremdkraftbetätigt zwischen einer in Figur 3 dargestellten ersten Stellung, in der die Leitungen 22 und 58 (sowie 28 und 52) voneinander getrennt sind, und einer nicht dargestellten zweiten Stellung bewegbar, in der die angeschlossenen Leitungen 22, 58 sowie 28, 52 direkt untereinander verbunden sind. Weiterhin können die Ventilanordnungen 34a, 34b in beliebig viele Zwischenstellungen verbracht werden. In der ersten Stellung der Ventilanordnungen 34a, 34b sind die Kammern 12, 14, 42, 44 der Hydraulikzylinder 10, 40 jeweils nur mit den zugeordneten Druckspeichern 26, 30, 56, 60 verbunden und ansonsten abgeschottet. In der zweiten Stellung verbinden die Ventilanordnungen 34a, 34b einerseits den ersten Kolbenraum 12 des ersten Hydraulikzylinders 10 und den zweiten Kolbenstangenraum 44 des zweiten Hydraulikzylinders 40 sowie andererseits den zweiten Kolbenraum 42 des zweiten Hydraulikzylinders 40 und den ersten Kolbenstangenraum 14 des ersten Hydraulikzylinders 10 untereinander. Anders als in der Figur 3 dargestellt, können die Ventilanordnungen 34a, 34b in ihrer am weitest möglich geschlossenen Stellung noch einen Durchlass ermöglichen, d. h. die eingezeichneten Sackbohrungen können durch eine Drosselöffnung verbunden sein.

In der ersten Stellung der Ventilanordnungen 34a, 34b erhält man analog zur ersten Ausführungsform eine relativ harte Federung, da die Hydraulikzylinder 10, 40 dort doppeltwirkend geschaltet sind. In der zweiten Stellung der Ventilanordnungen 34a, 34b ergibt sich eine weichere Federwirkung, da die Kammern 12, 14, 42, 44 der Hydraulikzylinder 10, 40 jeweils kreuzweise verschaltet sind, was Schwingungen in der Abstandsrichtung der Hydraulikzylinder 10, 40 effektiv unterbindet. In den Zwischenstellungen der Ventilanordnungen 34a, 34b ergibt sich jeweils ein zwischen den Endstellungen liegender Strömungswiderstand, der auch zu Zwischenwerten hinsichtlich der Federung und der Dämpfung führt.

Die Leitungen 22 und 52 sind noch mit einer Niveausteuerungshydraulik 62 verbunden, die wiederum elektronisch mittels einer Steuerung 66 kontrolliert werden, die eine Niveauregelung 64 und die Steuereinrichtung 36 zur Ansteuerung der Ventilanordnungen 34a, 34b beinhaltet. Die Niveauregelung 64 veranlasst die Niveausteuerungshydraulik 62, die Leitungen 22 und/oder 52 mit einer Quelle unter Druck stehenden Hydraulikfluids bzw. einem Tank zu verbinden, um zu erreichen, dass die Fahrerkabine 68 stets horizontal orientiert ist. Die Niveauregelung 64 steuert auch über die Steuereinrichtung 36 die über die Elektromagneten 38 synchron verstellten Ventilanordnungen 34a, 34b an, um im Moment einer Niveauveränderung eine Mindestöffnung der Ventilanordnungen 34a, 34b zu gewährleisten. Die Steuereinrichtung 36 passt die Federungseigenschaften der Federungsanordnung an die jeweiligen Betriebsbedingungen an, z. B. die Belastung des Fahrzeugs, die Bodeneigenschaften und den Schwingungszustand der Fahrerkabine 68.

## Patentansprüche

1. Hydraulische Federungsanordnung, umfassend:
einen ersten doppeltwirkenden Hydraulikzylinder (10) mit einem ersten Kolbenraum (12) und einem ersten Kolbenstangenraum (14),
einen ersten Druckspeicher (26), der ständig mit dem ersten Kolbenraum (12) verbunden ist,
einen zweiten Druckspeicher (30), der ständig mit dem ersten Kolbenstangenraum (14) verbunden ist,
einen zweiten doppeltwirkenden Hydraulikzylinder (40) mit einem zweiten Kolbenraum (42) und einem zweiten Kolbenstangenraum (44),
einen dritten Druckspeicher (56), der mit dem zweiten Kolbenraum (42) verbunden ist, und
einen vierten Druckspeicher (60), der mit dem zweiten Kolbenstangenraum (44) verbunden ist,
wobei der erste Kolbenraum (12) und der zweite Kolbenstangenraum (44) durch einen ersten Strömungswiderstand untereinander verbunden oder verbindbar sind, und
dass der zweite Kolbenraum (42) und der erste Kolbenstangenraum (14) durch einen zweiten Strömungswiderstand untereinander verbunden oder verbindbar sind,
**dadurch gekennzeichnet, dass** der dritte Druckspeicher (56) ständig mit dem zweiten Kolbenraum (42) verbunden ist,
dass der vierte Druckspeicher (60) ständig mit dem zweiten Kolbenstangenraum (44) verbunden ist,
und dass der erste Strömungswiderstand und der zweite Strömungswiderstand veränderbar sind.

2. Hydraulische Federungsanordnung nach Anspruch 1, **dadurch gekennzeichnet, dass** zwischen den Druckspeichern (26, 30) und den zugehörigen Kammern (12, 14) des oder der Hydraulikzylinder (10) feste oder verstellbare Drosseln (24, 32) oder andere Strömungswiderstände angeordnet sind.

3. Hydraulische Federungsanordnung nach einem der Ansprüche 1 oder 2, **dadurch gekennzeichnet, dass** der veränderbare Strömungswiderstand oder die veränderbaren Strömungswiderstände durch eine oder mehrere Ventilanordnungen (34, 34a, 34b) gebildet werden.

4. Hydraulische Federungsanordnung nach Anspruch 3, **dadurch gekennzeichnet, dass** die Ventilanordnungen (34, 34a, 34b) Proportionalventile umfassen.

5. Hydraulische Federungsanordnung nach einem der Ansprüche 1 bis 4, **dadurch gekennzeichnet, dass** der veränderbare Strömungswiderstand oder die veränderbaren Strömungswiderstände mit einer auf Umgebungsbedingungen reagierenden Steuereinrichtung (36) verbunden ist oder sind.

6. Fahrzeug mit einem Fahrgestell (70) und einer Bedienerstation (68), die mittels einer hydraulischen Federungsanordnung nach einem der vorhergehenden Ansprüche gegenüber dem Fahrgestell (70) abgestützt ist.

## Claims

1. Hydraulic suspension arrangement, comprising:
a first double-action hydraulic cylinder (10) with a first piston space (12) and a first piston rod space (14),
a first pressure accumulator (26) which is continuously connected to the first piston space (12),
a second pressure accumulator (30) which is continuously connected to the first piston rod space (14),
a second double-action hydraulic cylinder (40) with a second piston space (42) and a second piston rod space (44),
a third pressure accumulator (56) which is connected to the second piston space (42), and
a fourth pressure accumulator (60) which is connected to the second piston rod space (44),
wherein the first piston space (12) and the second piston rod space (44) are or can be connected to each other by a first flow resistor, and
wherein the second piston space (42) and the first piston rod space (14) are or can be connected to each other by a second flow resistor,
**characterized in that** the third pressure accumulator (56) is continuously connected to the second piston space (42),
**in that** the fourth pressure accumulator (60) is continuously connected to the second piston rod space (44),
and **in that** the first flow resistor and the second flow resistor can be varied.

2. Hydraulic suspension arrangement according to Claim 1, **characterized in that** fixed or adjustable throttles (24, 32) or other flow resistors are arranged between the pressure accumulators (26, 30) and the associated chambers (12, 14) of the hydraulic cylinder or of the hydraulic cylinders (10).

3. Hydraulic suspension arrangement according to either of Claims 1 and 2, **characterized in that** the variable flow resistor or the variable flow resistors are formed by one or more valve arrangements (34, 34a, 34b).

4. Hydraulic suspension arrangement according to Claim 3, **characterized in that** the valve arrangements (34, 34a, 34b) comprise proportional valves.

5. Hydraulic suspension arrangement according to one of Claims 1 to 4, **characterized in that** the variable flow resistor or the variable flow resistors is or are connected to a control device (36) which reacts to environmental conditions.

6. Vehicle with a chassis (70) and an operator station (68) which is supported in relation to the chassis (70) by means of a hydraulic suspension arrangement according to one of the preceding claims.

## Revendications

1. Agencement de suspension à ressort hydraulique, comprenant :
un premier cylindre hydraulique à double action (10), avec une première chambre de piston (12) et une première chambre de tige de piston (14),
un premier accumulateur de pression (26) qui est connecté en permanence à la première chambre de piston (12),
un deuxième accumulateur de pression (30) qui est connecté en permanence à la première chambre de tige de piston (14),
un deuxième cylindre hydraulique à double action (40) avec une deuxième chambre de piston (42) et une deuxième chambre de tige de piston (44),
un troisième accumulateur de pression (56) qui est connecté à la deuxième chambre de piston (42), et
un quatrième accumulateur de pression (60) qui est connecté à la deuxième chambre de tige de piston (44),
la première chambre de piston (12) et la deuxième chambre de tige de piston (44) étant connectées ou
pouvant être connectées l'une à l'autre par une première résistance à l'écoulement, et
la deuxième chambre de piston (42) et la première chambre de tige de piston (14) étant connectées ou
pouvant être connectées l'une à l'autre par une deuxième résistance à l'écoulement,
**caractérisé en ce que** le troisième accumulateur de pression (56) est connecté en permanence à la deuxième chambre de piston (42),
**en ce que** le quatrième accumulateur de pression (60) est connecté en permanence à la deuxième chambre de tige de piston (44),
et **en ce que** la première résistance à l'écoulement et la deuxième résistance à l'écoulement sont variables.

2. Agencement de suspension à ressort hydraulique selon la revendication 1, **caractérisé en ce qu'**entre les accumulateurs de pression (26, 30) et les chambres associées (12, 14) du ou des cylindres hydrauliques (10) sont disposés des étranglements fixes ou réglables (24, 32) ou d'autres résistances à l'écoulement.

3. Agencement de suspension à ressort hydraulique selon l'une quelconque des revendications 1 ou 2, **caractérisé en ce que** la résistance à l'écoulement variable ou les résistances à l'écoulement variables sont formées par un ou plusieurs agencements de soupape (34, 34a, 34b).

4. Agencement de suspension à ressort hydraulique selon la revendication 3, **caractérisé en ce que** les agencements de soupape (34, 34a, 34b) comprennent des soupapes proportionnelles.

5. Agencement de suspension à ressort hydraulique selon l'une quelconque des revendications 1 à 4, **caractérisé en ce que** la résistance à l'écoulement variable ou les résistances à l'écoulement variables est ou sont connectées à un dispositif de commande (36) réagissant aux conditions ambiantes.

6. Véhicule comprenant un châssis (70) et un poste de commande (68), qui est supporté par le biais du châssis (70) au moyen d'un agencement de suspension à ressort hydraulique selon l'une quelconque des revendications précédentes.
